Europäisches Patentamt

European Patent Office

Office européen des brevets

(19)

(11) Publication number : **0 492 812 A2**

## (12) EUROPEAN PATENT APPLICATION

(21) Application number : **91311049.0**

(22) Date of filing : **28.11.91**

(51) Int. Cl.⁵ : **H04L 1/00**

(30) Priority : **10.12.90 US 624450**

(43) Date of publication of application :
**01.07.92 Bulletin 92/27**

(84) Designated Contracting States :
**DE ES FR GB IT SE**

(71) Applicant : **AMERICAN TELEPHONE AND TELEGRAPH COMPANY**
**550 Madison Avenue**
**New York, NY 10022 (US)**

(72) Inventor : **Condon, Joseph Henry**
**190 Kent Pl Blvd**
**Summit, New Jersey 07901 (US)**

(74) Representative : **Watts, Christopher Malcolm Kelway, Dr. et al**
**AT&T (UK) LTD. AT&T Intellectual Property Division 5 Mornington Road**
**Woodford Green Essex IG8 OTU (GB)**

(54) Error detection and framing in packets transmitted in a sequence of fixed-length cells.

(57)   A digital error check sequence for detecting errors in messages. The error check sequence has a form such that it is distinguishable from a sequence of padding bits, and can thus be employed to both mark the end of the message and determine whether there was an error in the transmission of the message. In one embodiment, the error check sequence includes a single-bit first field and a cyclic redundancy code (CRC) whose least significant bit is always 1. The value of the first field is chosen such that when it is appended to the message, the result is a CRC with a least significant bit of 1. Also disclosed are methods and apparatus for generating the error check sequence and transmission and receiving systems employing the error check sequence.

FIG. 4

## Background of the Invention

### Field of the Invention

The invention relates generally to the transmission of digital data and more specifically to the transmission of variable-length packets of digital data in a system in which data is transmitted in fixed-length cells.

### Description of the Prior Art

The following discussion of the prior art will first describe error detection in variable-length packets, will then describe how variable-length packets are transmitted in a system which employees fixed-length cells, and will finally describe certain problems with error detection in variable-length packets sent using fixed-length cells.

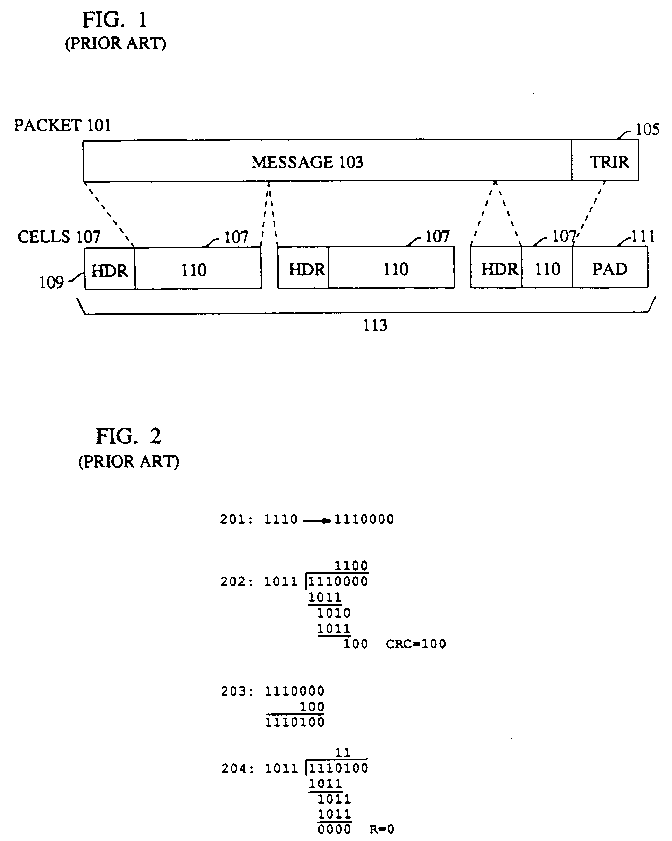

### Error Detection in Variable-length Packets: FIGs. 1-3

Historically, digital data has been transmitted in variable-length packets. FIG. 1 shows such a packet 101. For purposes of the present discussion, the packet can be regarded as containing a message 103 which may have a varying number of bits and a trailer (trlr) 105 which contains information which is not part of the message but is useful in transmission of the packet. One kind of information typically carried in trailer 105 is an *error check sequence,* a sequence of bits whose value is dependent upon the sequence of bits in the message. The error check sequence is computed when the message is sent. Another computation is performed on the message and the error check sequence when the message is received. If the result is not a predetermined value, an error in the course of transmission caused a change in the message or in the error check sequence.

A particularly useful type of error check sequence is a *cyclic redundancy code* or CRC. As explained in detail in A.S. Tanenbaum, *Computer Neworks*, 2.ed, Prentice Hall, Englewood Cliffs, NJ, 1988, pp. 208-212, a CRC having a number of bits $m$ may be computed for a message as follows:

1. the message is left shifted $m$ bits.
2. a specially selected value termed a *generator* is divided into the left shifted message using modulo 2 arithmetic. The remainder is the CRC. The generator has $m+l$ bits, with most significant bit (msb) and least significant bit (lsb) equal to 1.

The CRC is then subtracted from the left shifted message, again using modulo 2 arithmetic. The result of the subtraction is the same as if the CRC had been appended to the message. The packet containing the left-shifted message and the CRC is then transmitted. When the packet is received, the generator used to obtain the CRC is divided into the left-shifted message minus the CRC, and if the result is not 0, the contents of the packet were changed as a result of the transmission.

Fig. 2 shows an example of computing a three-bit CRC from a message and using the CRC to confirm the correctness of the transmission. The message is the bit sequence '1110' and the generator is the bit sequence '1011'. In the modulo 2 arithmetic used to compute the CRC, subtraction is performed by taking the EXCLUSIVE OR of corresponding digits and in long division, a divisor "goes into" a dividend if the divisor has as many bits as the dividend. The part of the figure labelled 201 shows how the message is left shifted the three bits in the CRC. The part labelled 202 shows the division of the left-shifted message to obtain the CRC '100'; the part labelled 203 shows the subtraction of the CRC from the left-shifted message. The part labelled 204 finally, shows the division of the result of step 3 by the generator. The remainder R equals 0 and shows that no error detectable by the CRC was introduced into the packet during transition.

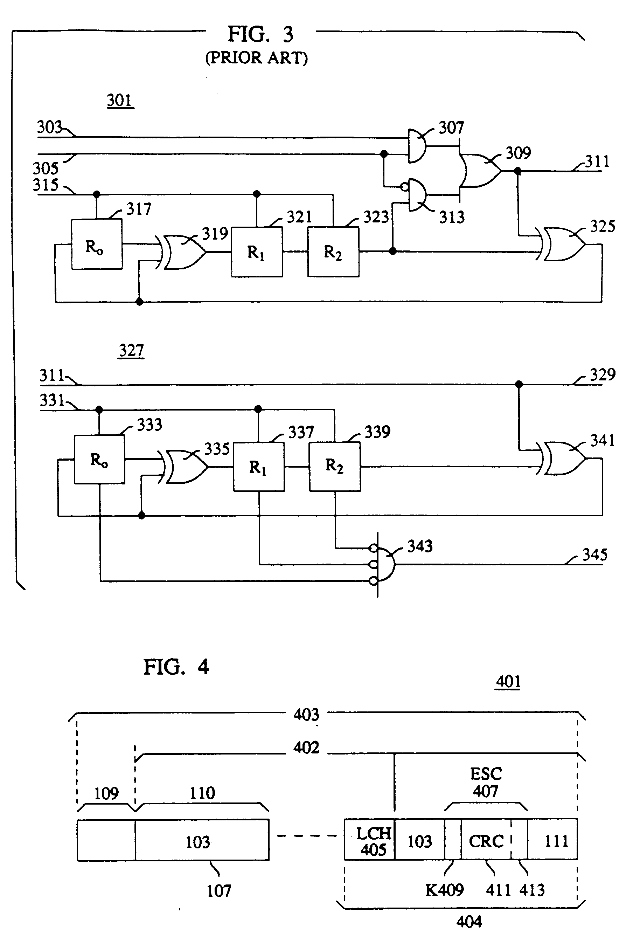

Digital circuits are known which perform the computations of parts 201 through 203 and part 204 of Fig. 2. In these circuits, the computations are performed sequentially as the bits of the message are transmitted and received. FIG. 3 shows a transmitter circuit 301 and a receiver circuit 327. Operation of transmitter circuit 301 is as follows. Before a packet is sent via line 311, shift registers 317, 331, and 323 are initialized to 0 by a signal on line 315. While the bits of the message are being sent, beginning with the most significant bit, the message bits appear on line 303 and line 305 is active, indicating that the message is being transmitted. When line 305 becomes inactive, indicating that all bits of the message have been transmitted, the three shift registers contain the three bits of the CRC, with the most significant bit in $R_2$ 323. At that point, the bits of the CRC are shifted onto line 311.

Operation of receiver circuit 327 proceeds in this manner. Before receiver 327 begins operation, a signal on line 331 initializes the three shift registers 333, 337, and 339 to 0. The message minus the CRC is received on line 311 and is passed on for further processing via line 329. When all bits of the shifted message minus the CRC have been received, the remainder resulting from the division of the shifted message minus the CRC is contained in registers 333, 337, and 339. If there are no errors detectable by means of the CRC, the remainder is the bit string '000' and line 345 is active, indicating no detectable errors; otherwise, the remainder is some other value and line 345 is inactive, indicating incorrect transmission.

## Transmitting Variable-Length Packets using Fixed-Length Cells

It has recently become apparent that fixed-length cells are more advantageous than varying-length packets in long-haul networks which must carry a mixture of traffic types. CCITT is currently developing a system employing fixed-length cells. It is termed Asynchronous Transfer Mode and employs a 53-byte cell. 5 bytes of the cell are the *header* and the remaining 48 bytes are the *payload*. FIG. 1 shows cells 107 of the type employed in ATM. Each cell has a header 109 and a payload 110. As shown in FIG. 1, a sequence 113 of cells 107 may be used to transmit a packet 101. The packet message 103 and trailer 105, including the CRC, are carried in payloads 110 of as many packets 107 as are required by the length of packet 101. If packet 101 does not evenly fill payload 110 of the last cell 107 in sequence 113, payload 110 is filled in with a pad 111 consisting of a sequence of bits which are recognizable as padding.

As may be seen from FIG. 1, when a packet 101 is transmitted in a sequence of cells 113, the receiver must be able to locate the end of packet 101 in the last cell 107 of sequence 113. Unless the end of packet 101 can be located, message 103 and trailer 105 cannot be extracted from sequence of cells 113. The prior art has employed techniques for locating the end of packet 101 including

- Putting a value indicating the length of packet 101 at the beginning of packet 101;
- Putting a value indicating the length of the portion of packet 101 in the last cell 107 in the header of that cell 107;
- Putting the length of the portion of packet 101 in the last cell 107 in the payload of cell 107; and
- Using a special sequence of bits to mark the end of packet 101.

A difficulty with putting a value indicating the length of packet 101 at the beginning of the packet is that the transmitter often does not know the length of the packet when it begins transmitting; a problem with putting a value indicating the length of the portion of packet 101 in last cell 107 in that cell's header is that space for the bits must be provided in the headers of all cells 107, even though most cells 107 are not last cells. A problem with putting the length of that portion of packet 101 in the payload is that it requires that the receiver of packet 101 understand the structure of the cells 107 used to transmit packet 101. That in turn makes it difficult for the network to use different-sized cells in different parts of the network. A difficulty with marking the end of packet 101 is that the mark interferes with the generation of the CRC by circuits such as circuit 301 and the checking of the CRC by circuits such as circuit 327. It is an object of the present invention to provide a solution to the foregoing problems.

## Summary of the Invention

In one aspect, the solution is an arrangement for sending a variable-length digital message. The arrangement comprises a sequence of one or more fixed length cells including a last cell indicated by a last cell indicator and a packet contained in the sequence of cells. The packet comprises the message, a digital error check sequence following the message, and if there is space remaining in the last cell following the digital error check sequence, a padding sequence which fills the remaining space. The digital error check sequence has a form such that the end of the digital error check sequence is always distinguishable from the beginning of the padding sequence.

In another aspect of the invention, the padding sequence has a form such that the length of the padding sequence does not affect the computation which determines whether the message has been correctly transmitted.

In a further aspect of the invention, the error check sequence is a cyclic redundancy code which is computed such that the least significant bit of the cyclic redundancy code always has a predetermined value.

Other aspects of the invention include methods for computing the error check sequence and circuitry which performs the computation. The foregoing aspects of the invention, as well as other objects and advantages thereof may be understood by those of ordinary skill in the art to which the invention pertains upon consideration of the Detailed Description and the Drawing.

## Brief Description of the Drawing

FIG. 1 shows prior-art variable-length packets and fixed-length cells.

FIG. 2 shows the computation of a prior-art CRC.

FIG. 3 shows prior-art circuitry for generating a CRC from a message and appending the CRC to the message and for determining from the message and the CRC whether the message was correctly transmitted.

FIG. 4 shows the arrangement of the invention for transmitting variable-length packets.

FIG. 5 shows a first method for computing the error check sequence of the invention.

FIG. 6 shows hardware for generating the error check sequence of the invention.

FIG. 7 is a schematic block diagram of a data transmission system employing the invention.

FIG. 8 shows a second method for computing the error check sequence of the invention.

The element numbers which appear in the figures and the Specification have two parts: the digits to the left of the two least-significant digit specify the number of the figure in which the item identified by the reference number first appears; the least significant digits identify the item in the figure identified by the remaining digits. Thus, an item with the reference number 101 first appears in FIG. 1.

## Detailed Description

The following Detailed Description first discloses the arrangement for transmitting variable-length messages of the present invention, then discloses two methods for computing the error check sequence used in the present invention and a circuit for generating the error check sequence and finally discloses a transmission system employing the present invention.

## An Arrangement for Transmitting Variable-length Messages: FIG. 4

FIG. 4 shows a sequence 403 of cells 107 which is used to transmit a message 103. Last cell 404 is the last cell 107 in sequence 403. It is identified as the last cell by last cell header (LCH) 405. Message 103 is part of packet 402, which is carried in payload 110 of the cells 107 in sequence 403. Other parts of packet 402 include error check sequence 407 and padding 111. The latter is of course not required if the end of error check sequence 407 corresponds to the end of last cell 404.

Error check sequence 407 has a form such that end 413 of error check sequence 407 is always distinguishable from the beginning of padding 111. Error check sequence 407 thus serves not only to detect errors, but also to mark the end of the contents of packet 402. In a preferred embodiment, padding 111 consists of a string of '0' bits and the error check sequence ends with a CRC whose least significant bit is always '1'. The end of the contents of packet 402 can thus always be found by beginning at the end of the last cell 404 and moving towards the beginning of the packet until the first "1" bit is found. In the preferred embodiment, error check sequence 407 has a fixed length, so that the end of message 103 can be found once the "1" bit at the end of CRC 411 has been found. It should be noted here that the length of padding 111 does not affect the check for the correctness of the message by the receiver: if the result of dividing the message and the appended CRC by the generator is 0, it remains 0 no matter how many '0' bits are appended to the CRC.

In addition to CRC 413, error check sequence 407 in a preferred embodiment contains K field 409. K field 409 is added to message 103 and is set such that the computation of error check sequence 407 results in an error check sequence whose end is always distinguishable from the beginning of padding 111. In a preferred embodiment, K field 409 is a single bit whose value is such that when CRC field 411 is computed from message 103 with K bit 409 appended to the message, CRC field 411's least significant bit 413 always has the value 1. In other embodiments employing techniques other than the CRC, K field 409 may not be required.

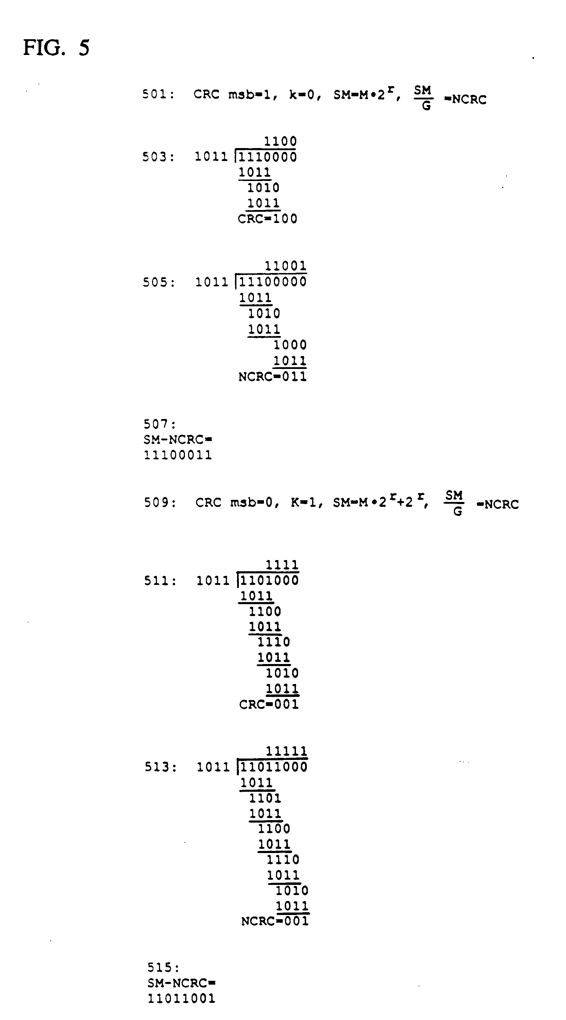

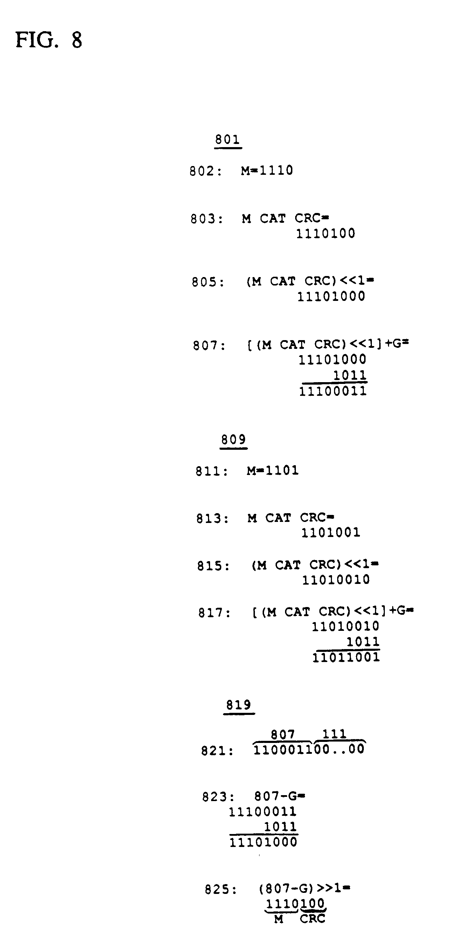

## Computation of ECS 407: FIGS. 5 and 8

Two algorithms have been developed for the computation of ECS 407. The first algorithm is the following:
- Compute a CRC for message 103 as described in the discussion of the prior art;
- If the most significant bit of the CRC is 1, set K to 0;
- Else set K to 1;
- Compute a new CRC using message 103 with K appended;

Once the new CRC has been computed, the fields of ECS 407 are set to K and the new CRC. The packet now consists of the message with K and the new CRC appended to it. Since the new CRC was computed using K, division of the message with K and the new CRC by the generator will result in a remainder which is not equal to '0' if there was a detectable error when the message was transmitted. As is apparent from this, the computation of the remainder may be performed by circuit 327, as previously described.

FIG. 5 shows the first algorithm with two examples. Both examples use the generator '1011'. The first example, 501, uses '1110' as message 103; the second, 509, uses '1101' as the message. In example 501, the first step is 503, in which the message '1110' is shifted to the left by the three bits of the CRC and the shifted message '1110000' is divided by the generator. The CRC is '100'. Since the most significant bit of the CRC is '1', K is 0. K is appended to the message to produce '11100', and that value is shifted three bits to the left to produce SM, which is equal to the message multiplied by $2^3$, as shown in 505. The shifted value is divided by the generator (G) to generate the new CRC (NCRC), whose value is '011'. The value SM-NCRC, finally, is produced in step 507. That value is '11100011', and the bits '0011' make up error check sequence 407.

The second example proceeds as the first example, except that the division of the left-shifted message '1101000' by the generator in step 511 results in the remainder '001', which is the CRC. Since the msb of the CRC is 0, K 409 has the value 1 and the result when K is appended to the message and the message is shifted is '11011000'. When the shifted message is divided by the generator in step 513, the remainder is '1', so NCRC has the value '001', SM-NCRC is '11011001', and error check sequence 407 has the value '1001'.

The second algorithm is the following:
- Compute a CRC for message 103 as described in the discussion of the prior art;

• Concatenate the CRC to message 103;
• Shift the concatenated value 1 bit to the left;
• Using modulo 2 arithmetic, add the generator to the shifted value.

Fig. 8 shows how the above algorithm may be applied using the messages and generators of Fig. 5. Application of the algorithm to the message '1110' is shown in the part labelled 801. Portion 802 shows the message, 803 shows the concatenation of the CRC 100 with the message, 805 shows the left shift, and 807 shows the addition of the generator. The result at 807, '11100011' is the same as the result at 507 in Fig. 5. Application of the algorithm to the message '1101' is shown in part 809. Steps 811-813 of that part correspond to steps 802-807 of part 801. Again, the result of step 817 is the same as the result at 515 of Fig. 5.

It should be noted regarding the above algorithm that as long as the generator is 1 bit longer than the CRC and begins and ends with a '1' bit, the concatenation of the CRC to the message, the left shift of the concatenated value by 1 bit, and the addition of the generator together guarantee troth that last bit 413 of ECS 417 will be 1 and that the value of K bit 409 will depend on the value of the most significant bit of the original CRC for the message, as described for the first algorithm.

Message 103 and the original CRC computed for it may be extracted from ECS 417 by reversing the algorithm just described. The steps include the following:

• Locate ECS 407 by beginning at the end of last cell 404 and moving back through the padding 111 of '0' bits until least significant '1' bit 413 of ECS 407 is encountered;
• Using modulo 2 arithmetic, subtract the generator from message 103 and ECS 407;
• Shift the result of the subtraction 1 bit to the right.

The result of these operations is the message concatenated with the message's CRC, and since that is the same as subtracting the CRC to the left-shifted message using modulo 2 arithmetic, division of the result by the generator, again using modulo 2 arithmetic, yields 0 if there is no detectable error and otherwise yields some other value.

Part 819 of Fig. 8 shows the application of the above algorithm to result 807 and packing 111 (821). In step 821, the packing is removed; in step 823, the generator is subtracted, using modulo 2 arithmetic. In step 825, the result of the subtraction is right shifted one bit; as can be seen by comparing the result of step 825 with step 503 of Fig. 5, the result is the concatenation of message of Fig. 5 '1011' with CRC '100' computed for that message.

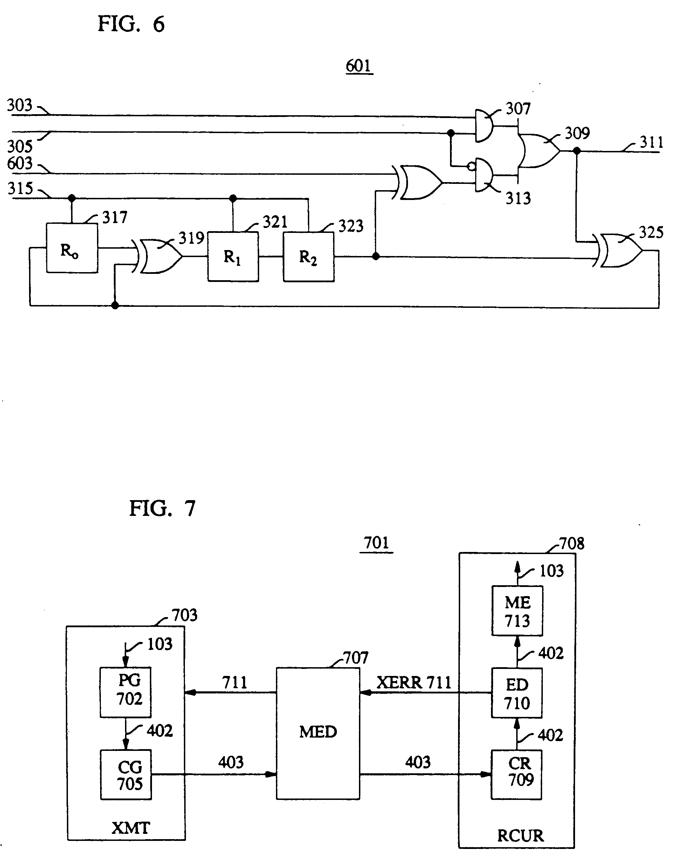

## Circuitry for Generating K 409 and CRC 411: FIG. 6

FIG. 6 is a logic diagram for a circuit 601 which generates K 409 and CRC 411 when G = '1011'. As may be seen from the Figure, circuit 601 differs from circuit 301 in only the following particulars:

• XOR gate 605 has been added to circuit 301;
• Inputs of XOR gate 605 are a "insert" control line 603 and the output of shift register 323; output of XOR gate 605 is to an input of AND gate 313.

Circuit 601 is initialized in the same fashion as circuit 301 and operates in exactly the same fashion as circuit 301 as long as transmit line 305 is active. When the last bit of message 103 has been output via gate 307, gate 309, and line 311, transmit line 305 becomes inactive. As explained with regard to circuit 301, at that point, shift registers 317, 321, and 323 contain the CRC which results from dividing the message by the generator. The most significant bit of the CRC is in register 323.

When transmit line 305 becomes inactive, "insert" line 603 becomes active for one clock cycle. The result of the activation of line 603 is the output of K bit 409 on line 311. The output occurs as follows. For the cycle during which line 603 is active, the output of XOR gate 605 is determined by the contents of shift register 323, i.e., by the most significant bit of the CRC. If register 323 contains '1', the output of gate 605 is '0'; if register 323 contains '0', the output is '1'. Since transmit line 305 is inactive, one input of AND gate 313 is high and the input from XOR gate 605 determines the output of AND gate 313. The output of AND gate 313, finally, determines the output of OR gate 309 to line 311 and to XOR gate 325. As required by the algorithm, when the msb of the CRC is '0', the value of K 409 is '1'; otherwise, it is '0'. Further, since the output also goes to XOR gate 325, i.e., to the part of circuit 601 which generates the CRC, that part of the circuit responds to K bit 409 as if it were part of message 103. On the next cycle, "insert" line 603 becomes inactive. Gate 605 then simply outputs the input from shift register 323, and circuit 601 works in exactly the same fashion as circuit 301 does when transmit line 305 is inactive.

While circuit 601 only has three shift registers, and consequently can generate only a three-bit CRC, the principles disclosed in circuit 601 may be employed to generate CRCs of any length. In a practical preferred embodiment, the error check sequence would be 32 bits long. The first bit would be the K bit, and the remaining 31 bits would be the CRC. In such an embodiment, the generator would be 32 bits long. Selection of generators and construction of CRC generation circuits for CRCs of such size are well known in the art.

## A Data Transmission System Employing Packets 402: FIG. 7

Figure 7 is a high-level block diagram of a data transmission system 701 employing packets 402. The system has three main components: transmitter 703, transmission medium 707, and receiver 708. Transmitter 703 receives a message 103 as input, produces packet 402 containing the message, produces cell sequence 403 containing the packet, and outputs cell sequence 403 to transmission medium 707. Transmission medium 707 may be any medium by means of which data may be transmitted. As previously indicated, cell sequences 403 are particularly adapted to long-haul networks, and transmission medium 707 may be such a long-haul network. Receiver 708 receives cell sequence 403 from transmission medium 707, extracts packet 402 from sequence 403, performs an error check on packet 402 using error checking sequence 407, and extracts message 103 from packet 402. If receiver 708 detects a transmission error, it sends a transmission error message 711 identifying the packet 402 which had the error to transmitter 701; transmitter 701 may then decide whether to retransmit packet 402.

Continuing in somewhat more detail, transmitter 701 employs packet generator 702 to generate packet 402 from message 103. An example of such a packet generator is circuit 601. Cell generator 705 then generates the sequence 403 of cells 107 which contain the packet. In so doing, cell generator 705 sets header 109 in last cell 404 to indicate that it is the last cell in sequence 403. In receiver 708, cell receiver 709 receives the cells in sequence 403 and extracts packet 402 from the cells. Last cell 404 containing the end of packet 402 is of course marked by last cell header 405. Packet 402 is then checked for errors by error detector 710, which may include a circuit like circuit 327. If error detector 710 detects a transmission error, RCVR 708 outputs a transmission error message 711. Packet 402 next goes to message extractor 713, which searches backwards through padding 111 until it reaches least significant bit 413 of error check sequence 407. Message extractor 713 then removes error check sequence 407 and padding 111, leaving message 103.

## Conclusion

The foregoing Detailed Description has disclosed to those of ordinary skill in the art how to make and use a novel arrangement for transmitting a variable-length message using fixed-length cells, has further disclosed how a novel error check sequence for use with the variable-length message may be derived, and has additionally disclosed logic circuitry which produces the novel error check sequence and a data transmission system in which packets containing the novel error check sequence may be employed. While the Detailed Description has disclosed the best mode presently known by the inventors thereof for practicing the invention, other implementations of the concepts disclosed herein are possible. For example, the logic of the present invention may be reversed, so that the padding is a string of '1' bits and the least significant bit of the CRC is a '0'. Further, as pointed out above, different generators and CRCs of various lengths may be employed. Additionally, variations on circuit 601 may be implemented which operate to the same effect. Finally, the concept of the invention may be embodied in error check sequences which employ neither a K bit nor a CRC. For these reasons, the Detailed Description is to be understood as being in all respects illustrative and exemplary but not restrictive, and the scope of the inventions is to be determined not from the Detailed Description, but rather from the claims as read in light of the Detailed Description and interpreted according to the Doctrine of Equivalents.

## Claims

1. A method for sending a variable-length digital message (103) in a sequence of one or more fixed-length cells (107) characterized by the steps of:

    placing the digital message in the fixed length cells until at least the remainder of the message and a digital error check sequence (407) will fit in a single one of the cells;

    marking the cell which is to contain the remainder of the message and the digital error check sequence as the last cell;

    computing the digital error check sequence such that the end of the digital error check sequence is always distinguishable from a padding sequence (111); and

    placing in the cell marked as the last cell the remainder of the message, the digital error check sequence, and, to the extent required to fill the cell marked as the last cell, the padding sequence,

2. The method set forth in claim 1 further characterized in that:

    the step of computing the digital error check sequence is performed such that the number of bits in the padding sequence does not affect error checking computations using the digital error check sequence.

3. The method set forth in claim 1 further characterized in that:

    the step of computing the digital error check sequence is performed such that the least significant bit (413) of the digital error check sequence always has a predetermined value.

4. The method set forth in claim 3 further characterized in that the step of computing the digital error check sequence further comprises the step of:

adding a least significant bit determining portion (409) to the digital error check sequence which determines the value of the least significant bit of the digital error check sequence.

5. The method set forth in claim 4 further characterized in that the step of computing the digital error check sequence further comprises the steps of:

determining a value for the least significant bit determining portion such that the least significant bit of a first cyclic redundancy code computed for the message with the least significant bit determining portion appended thereto has the predetermined value;

appending the least significant bit determining portion to the message; and

computing the first cyclic redundancy code for the message with the appended least significant bit determining portion.

6. The method set forth in claim 5 further characterized in that:

the step of determining a value for the least significant bit determining portion determines a value such that the predetermined value is 1.

7. The method set forth in claim 6 further characterized in that the step of determining a value includes the steps of:

computing a second cyclic redundancy code for the message without the appended least significant bit determining portion; and

if the most significant bit of the second cyclic redundancy code is 1, setting the least significant bit determining portion to 0 and otherwise to 1.

8. The method set forth in claim 7 further characterized in that:

the step of computing the digital error checking sequence is done such that the padding sequence consists of 0 bits.

9. Transmission apparatus for providing a viable-length packet (101) to a transmission medium, the apparatus being characterized in that:

the packet comprises

a variable-length message (103); and

a digital error check sequence (407) having a predetermined pattern (413).

10. The apparatus set forth in claim 9 further characterized in that:

the digital error check sequence comprises

a first cyclic redundancy code (411) having the predetermined pattern; and

a pattern determining portion (409) whose value is such that the cyclic redundancy code produced from the message with the pattern determining portion appended thereto is the first cyclic redundancy code.

11. The apparatus set forth in claim 10 further characterized in that:

the predetermined pattern is a least significant bit having a predetermined value; and

the pattern determining portion is a single bit.

12. The apparatus set forth in claim 11 further characterized in that:

the predetermined value is 1; and

the value of the pattern determining portion is determined such that when the most significant bit of a second cyclic redundancy code for the message without the appended pattern determining portion is 1, the value of the pattern determining portion is 0 and is otherwise 1.

13. The apparatus set forth in claim 11 or claim 12 further characterized in that:

the apparatus provides the packet in a sequence of fixed-length cells 107; and

any padding (111) required in the last cell of the sequence consists of a sequence of 1 or more bits, each bit in the sequence of bits having a value other than the predetermined value.

## FIG. 1
(PRIOR ART)

PACKET 101

| MESSAGE 103 | TRIR |
|---|---|

105

CELLS 107   107   107   107   111

109

| HDR | 110 | HDR | 110 | HDR | 110 | PAD |
|---|---|---|---|---|---|---|

113

## FIG. 2
(PRIOR ART)

201:  1110 ⟶ 1110000

```
                    1100
202:  1011 |1110000
           1011
           1010
           1011
            100   CRC=100
```

```
203:  1110000
          100
      1110100
```

```
                  11
204:  1011 |1110100
           1011
           1011
           1011
           0000   R=0
```

8

## FIG. 3
(PRIOR ART)

301

303
305
315
317 R₀
319
321 R₁
323 R₂
307
313
309
311
325

327

311
331
333 R₀
335
337 R₁
339 R₂
329
341
343
345

## FIG. 4

401

403
402

109
110
103
107

ESC
407

LCH
405
103
CRC
111

K409   411 413

404

# FIG. 5

501:  CRC msb=1, k=0, SM=M•2$^r$,  $\dfrac{SM}{G}$ =NCRC

```
                1100
503:   1011 |1110000
              1011
              ────
               1010
               1011
              ────
              CRC=100
```

```
                11001
505:   1011 |11100000
              1011
              ────
               1010
               1011
              ────
                1000
                1011
               ────
              NCRC=011
```

507:
SM-NCRC=
11100011

509:  CRC msb=0, K=1, SM=M•2$^r$+2$^r$,  $\dfrac{SM}{G}$ =NCRC

```
                1111
511:   1011 |1101000
              1011
              ────
               1100
               1011
              ────
                1110
                1011
               ────
                 1010
                 1011
                ────
                CRC=001
```

```
                11111
513:   1011 |11011000
              1011
              ────
               1101
               1011
              ────
                1100
                1011
               ────
                 1110
                 1011
                ────
                  1010
                  1011
                 ────
                 NCRC=001
```

515:
SM-NCRC=
11011001

10

## FIG. 6

## FIG. 7

# FIG. 8

801

802:  M=1110

803:  M CAT CRC=
       1110100

805:  (M CAT CRC)<<1=
       11101000

807:  [(M CAT CRC)<<1]+G=
       11101000
          __1011__
       11100011

809

811:  M=1101

813:  M CAT CRC=
       1101001

815:  (M CAT CRC)<<1=
       11010010

817:  [(M CAT CRC)<<1]+G=
       11010010
          __1011__
       11011001

819

      807‾‾‾‾111‾
821:  110001100..00

823:  807-G=
  11100011
    __1011__
  11101000

825:  (807-G)>>1=
   1110100
   ‾M‾‾CRC‾